# EUROPÄISCHE PATENTANMELDUNG

(11) **EP 2 620 665 A1**
(43) Veröffentlichungstag der Anmeldung: **31.07.2013**
(21) Anmeldenummer: 12152440.9
(22) Anmeldetag: 25.01.2012
(51) Int. Cl.: F16D 3/06, F01D 5/02, F01D 13/00, F04D 29/04

(54) **Drehmomentkupplung und Verfahren zum Einstellen der Drehmomentkupplung**

(71) Anmelder: Siemens Aktiengesellschaft, 80333 München (DE)
(72) Erfinder: Barkowski, David, 47058 Duisburg (DE); Bayram, Ridvan, 47804 Krefeld (DE); Guck, Volker, 50677 Köln (DE); Hoffacker, Ralf, 47800 Krefeld (DE); Kostenko, Yevgen, 40878 Ratingen (DE); Mahnke, Rene, 45468 Mülheim an der Ruhr (DE)

(57) **Zusammenfassung**

Eine Drehmomentkupplung weist eine erste Kupplungshälfte (6), die ein erstes Kupplungsgewinde (10) aufweist, und eine zweite Kupplungshälfte (7), die ein zweites Kupplungsgewinde (11) mit einer zum ersten Kupplungsgewinde (10) entgegensinnigen Drehrichtung aufweist und mit der ersten Kupplungshälfte (6) verdrehfest und relativ zur ersten Kupplungshälfte (6) axialverschiebbar befestigt ist, sowie eine Muffe (9) mit einem ersten Muffengewinde (12) und einem zweiten Muffengewinde (13) auf, wobei jedes der Muffengewinde (12, 13) mit einem der Kupplungsgewinde (10, 11) verschraubt ist und die Muffe (9) derart von einer drehzahlvariablen Antriebseinheit (15) angetrieben ist, dass die Muffe (9) mittels der Antriebseinheit (15) mit einer zu der Winkelgeschwindigkeit der Kupplungshälften (6, 7) verschiedenen Winkelgeschwindigkeit rotierbar ist, so dass der Axialabstand (21) der Kupplungshälften (6, 7) zueinander veränderbar ist, sowie synchron mit den Kupplungshälften (5, 6) rotierbar ist, so dass der Axialabstand (21) gleich bleibt.

## Beschreibung

Die Erfindung betrifft eine Drehmomentkupplung, einen Strang mit mindestens zwei Turbomaschinen, deren Rotoren mit der Drehmomentkupplung gekuppelt sind, sowie ein Verfahren zum Einstellen der Axialposition der Rotoren.

In einer verfahrenstechnischen Anlage ist für den Antrieb eines Turboverdichters insbesondere eine Dampfturbine vorgesehen, wobei der Rotor der Dampfturbine und der Rotor des Turboverdichters mit einer Drehmomentkupplung gekuppelt sind. Der Rotor der Dampfturbine ist beispielsweise mit einem Axiallager in Axialrichtung festgelegt, das an dem Längsende des Rotors angebracht ist, das der Drehmomentkupplung abgewandt ist. Beim Betrieb der Dampfturbine steht insbesondere der Rotor der Dampfturbine in Kontakt mit Prozessdampf, so dass der Rotor von dem Prozessdampf erwärmt wird, womit eine entsprechende thermische Axialausdehnung des Rotors einher geht. Insbesondere beim Anfahren der Dampfturbine ist der Wärmeeintrag von dem Prozessdampf in den Rotor hoch, wobei die Änderung der Axiallänge des Rotors entsprechend ist. Dadurch, dass der Rotor mit dem Axiallager axial an dem der Drehmomentkupplung abgewandten Längsende festgelegt ist, erfährt das andere Längsende, an der die Drehmomentkupplung angebracht ist, die größte axiale Verschiebung. Diese axiale Verschiebung wird via die Drehmomentkupplung auf den Rotor des Turboverdichters übertragen, wodurch der Rotor des Turboverdichters ebenfalls axial verschoben wird. Somit ändert sich die axiale Position des Rotors relativ zum Gehäuse des Turboverdichters, wodurch strömungsmechanisch ungünstige Zustände in dem Turboverdichter auftreten können. Außerdem muss die axiale Verschiebung des Rotors des Turboverdichters in dessen Gehäuse konstruktiv vorgehalten werden, womit in der Regel Geometrien in dem Turboverdichter in Kauf genommen werden müssen, mit denen Einbußen im thermodynamischen Wirkungsgrad des Turboverdichters einhergehen. Das Problem kann analog auftreten, wenn beispielsweise zwei Rotoren von zwei Dampfturbinen mit einer Drehmomentkupplung gekuppelt sind.

Aufgabe der Erfindung ist es, eine Drehmomentkupplung, einen Strang mit mindestens zwei Turbomaschinen, deren Rotoren mit der Drehmomentkupplung gekuppelt sind, sowie ein Verfahren zum Einstellen der Axialposition der Rotoren zu schaffen, wobei die Turbomaschinen über einen großen Betriebsbereich effektiv betreibbar sind.

Die erfindungsgemäße Drehmomentkupplung weist eine erste Kupplungshälfte, die ein erstes Kupplungsgewinde aufweist, und eine zweite Kupplungshälfte, die ein zweites Kupplungsgewinde mit einer zum ersten Kupplungsgewinde entgegensinnigen Drehrichtung aufweist und mit der ersten Kupplungshälfte verdrehfest und relativ zur ersten Kupplungshälfte axialverschiebbar befestigt ist, sowie eine Muffe mit einem ersten Muffengewinde und einem zweiten Muffengewinde auf, wobei jedes der Muffengewinde mit einem der Kupplungsgewinde verschraubt ist und die Muffe derart von einer drehzahlvariablen Antriebseinheit angetrieben ist, dass die Muffe mittels der Antriebseinheit mit einer zu der Winkelgeschwindigkeit der Kupplungshälften verschiedenen Winkelgeschwindigkeit rotierbar ist, so dass der Axialabstand der Kupplungshälften zueinander veränderbar ist, sowie synchron mit den Kupplungshälften rotierbar ist, so dass der Axialabstand gleich bleibt. Der erfindungsgemäße Strang weist mindestens zwei Turbomaschinen auf, deren Rotoren mit der Drehmomentkupplung gekuppelt sind.

Das erfindungsgemäße Verfahren zum Einstellen der Axialposition der Rotoren der Turbomaschinen des Strangs weist folgende Schritte auf: Betreiben des Strangs mit den Turbomaschinen, deren Rotoren mit der Drehmomentkupplung miteinander gekuppelt sind, wobei von der Antriebseinheit angetrieben die Muffe synchron zu den Rotoren rotiert wird; Vorherbestimmen eines Soll-Werts des Axialabstands der beiden Kupplungshälften; Bestimmen eines Ist-Werts des Axialabstands der beiden Kupplungshälften; Wenn der Soll-Wert ungleich dem Ist-Wert ist, Rotieren der Muffe mittels der Antriebseinheit mit einer zu der Winkelgeschwindigkeit der Kupplungshälften derart verschiedenen Winkelgeschwindigkeit und mit einer derartigen Dauer, dass der Ist-Wert gleich dem Soll-Wert wird. Bevorzugtermaßen wird der Ist-Wert aus einem Axialabstand von einem Punkt auf dem Strang zu einem Fixpunkt am Fundament des Strangs bestimmt. Ferner ist es bevorzugt, dass der Ist-Wert durch ein Ultraschallverfahren oder mittels eines induktiven Abstandssensors bestimmt wird.
Besteht der Strang beispielsweise aus einer Dampfturbine und einem Turboverdichter als die Turbomaschinen, erfährt insbesondere beim Anfahren der Rotor der Dampfturbine einen hohen Wärmeeintrag durch den Prozessdampf, wodurch sich die Axiallänge des Dampfturbinenrotors ändert. Via die Drehmomentkupplung könnte der Rotor des Turboverdichters ebenfalls axial verschoben werden, womit sich die axiale Position des Rotors des Turboverdichters relativ zum Gehäuse des Turboverdichters nachteilig ändern würde. Mit Hilfe der erfindungsgemäßen Drehmomentkupplung und dem erfindungsgemäßen Verfahren kann dem entgegengewirkt werden, indem die sonst auftretende axiale Verschiebung des Rotors des Turboverdichters durch die entsprechende Axialverschiebung der beiden Kupplungshälften durch die Betätigung der Antriebseinheit kompensiert wird. Dadurch kann vorteilhaft in einem großen Betriebsbereich des Strangs, insbesondere beim Anfahren der Dampfturbine, die Axialposition des Rotors des Turboverdichters relativ zum Rotor der Dampfturbine eingestellt werden, wodurch etwaige ungünstige Axialverrückungen des Rotors des Turboverdichters unterbunden sind.

Die Kupplungsgewinde sind bevorzugt Außengewinde und die Muffengewinde Innengewinde und/oder die Kupplungsgewinde und die Muffengewinde Feingewinde. Durch das Vorsehen von Feingewinden ist der Axialabstand der beiden Kupplungshälften zueinander präzise einstellbar. Die Kupplungshälften stehen bevorzugt formschlüssig gegenseitig in Eingriff. Die Antriebseinheit ist bevorzugt ein Motor, insbesondere ein Elektromotor, welche mittels eines Getriebes mit der Muffe gekuppelt ist. Es ist bevorzugt, dass das Getriebe ein von dem Motor angetriebenes Ritzel aufweist, das in einen an der Muffe angebrachten Zahnkranz eingreift. Dabei ist der Zahnkranz bevorzugt stirnseitig oder radial außenseitig an der Muffe angeordnet.

Der Turboverdichter ist beispielsweise in Axialbauweise und weist abwechselnd fest stehende Leitschaufelkränze und rotierende Laufschaufelkränze auf. Bei der unerwünschten und von der Drehmomentkupplung nicht kompensierten Axialverschiebung des Rotors des Turboverdichters kommt es zu einem Versatz der Laufschaufelkränze relativ zu den Leitschaufelkränzen, so dass sich beispielsweise die Hinterkanten der Laufschaufeln eines der Laufschaufelkränze den Vorderkanten der Laufschaufeln des stromab angeordneten Leitschaufelkranzes ungünstig annähern. Dabei kommt es zu Fehlanströmungen in dem Leitschaufelkranz, wodurch der thermodynamische Wirkungsgrad des Turboverdichters herabgesetzt ist. Hat der Turboverdichter beispielsweise eine in Hauptströmungsrichtung eine sich verjüngende Gehäusekontur, kann bei der unerwünschten und von der Drehmomentkupplung nicht kompensierten Axialverschiebung des Rotors des Turboverdichters eine sich ungünstige Veränderung des Radialspalts zwischen den Schaufelspitzen der Laufschaufeln zum Gehäuse einstellen. Ist der Rotor des Turboverdichters in die Hauptströmungsrichtung axial ungünstig versetzt, kann der Radialspalt überbrückt werden und es kommt zu einem schädlichen Anstreifen der Laufschaufeln an dem Gehäuse. Im Fall, dass der Rotor des Turboverdichters entgegen der Hauptströmungsrichtung axial ungünstig versetzt ist, kann der Radialspalt groß werden, wodurch sich Spaltströmungseffekte verstärken und der thermische Wirkungsgrad des Turboverdichters abnimmt. Mit Hilfe der erfindungsgemäßen Drehmomentkupplung und dem erfindungsgemäßen Verfahren zum Einstellen der Axialposition der Rotoren kann die Axialverschiebung des Rotors des Turboverdichters kompensiert werden, wodurch die vorher genannten Nachteile überwunden sind.

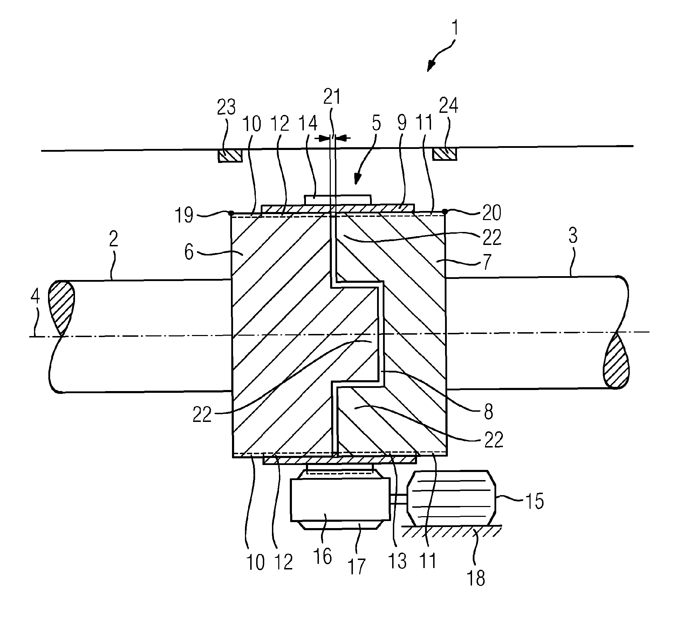

Im Folgenden wird eine bevorzugte Ausführungsform der erfindungsgemäßen Drehmomentkupplung anhand der beigefügten schematischen Zeichnung erläutert. Die Figur zeigt einen Längsschnitt durch einen Strang mit der erfindungsgemäßen Drehmomentkupplung.

Wie es aus der Figur ersichtlich ist, weist ein Strang 1 eine erste Welle 2, eine zweite Welle 3 und eine Drehmomentkupplung 5 auf, wobei die erste Welle 2 mit der zweiten Welle 3 mittels der Drehmomentkupplung 5 gekuppelt ist. Die erste Welle 2 und die zweite Welle 3 haben eine gemeinsame Wellenachse 4, um die die Wellen 2, 3 und die Drehmomentkupplung 5 rotierbar ist. Die Drehmomentkupplung 5 weist eine erste Kupplungshälfte 6 und eine zweite Kupplungshälfte 7 auf, wobei die erste Kupplungshälfte 6 mit der ersten Welle 2 und die zweite Kupplungshälfte 7 mit der zweiten Welle 3 fest verbunden sind. Die beiden Kupplungshälften 6, 7 stehen miteinander formschlüssig und axialverschiebbar in Eingriff. Dazu weisen die Kupplungshälften 6, 7 an ihren zueinander gewandten Stirnseiten eine Mehrzahl an Kupplungszähnen 22 auf, die formschlüssig ineinander greifen. Dabei ist denkbar, dass die Seitenflächen der Kupplungszähne 22 parallel oder unter einem Winkel zu der Wellenachse 4 verlaufen. Zwischen den Kupplungshälften 6, 7 ist ein Kupplungsspalt 8 mit einem Axialabstand 21 vorgesehen.
Die erste Kupplungshälfte 6 weist an ihrer radialen Außenseite ein erstes Kupplungsgewinde 10 und die zweite Kupplungshälfte 7 weist an ihrer radialen Außenseite ein zweites Kupplungsgewinde 11 auf. Die Kupplungsgewinde 10, 11 haben gegensinnige Drehrichtungen und die Achsen der Kupplungsgewinde 10, 11 fallen mit der Wellenachse 4 zusammen. Die Drehmomentkupplung 5 weist ferner eine Muffe 9 mit einem radial innen liegenden, ersten Muffengewinde 12 sowie einem radial innen liegenden, zweiten Muffengewinde 13 auf. Die Muffengewinde 12, 13 haben gegensinnige Drehrichtungen. Denkbar ist, dass die Gewinde 10 bis 13 als Feingewinde ausgebildet sind. Das erste Muffengewinde 12 ist mit dem ersten Kupplungsgewinde 10 und das zweite Muffengewinde 13 mit dem zweiten Kupplungsgewinde 11 verschraubt, so dass die Kupplungshälften 6, 7 von der Muffe 9 ummantelt sind und gegen ein Auseinanderrutschen gesichert sind. Ebenso ist denkbar, dass die Muffe radial innseitig an den Kupplungshälften angeordnet ist. In diesem Fall würden die Kupplungshälften Innengewinde und die Muffe Außengewinde aufweisen. Durch ein Drehen der Muffe 9 relativ zu den Kupplungshälften 6, 7 kann der Kupplungsspalt 8 verbreitert oder verschmälert werden. Dabei ist der breitest mögliche Kupplungsspalt 8 durch die Länge der Kupplungszähne 22 in Axialrichtung vorgegeben.

Der Strang 1 ist auf einem Fundament 18 angeordnet. An dem Fundament 18 ist eine Antriebseinheit 15 angebracht, die mit der Muffe 9 gekuppelt ist. Mit der Antriebseinheit 15 kann das Drehen der Muffe 9 relativ zu den Kupplungshälften 6, 7 bewerkstelligt werden. Dazu weist die Muffe 9 radial außenseitig einen Zahnkranz 14 auf, der in ein Ritzel 17 eines Getriebes 16 der Antriebseinheit 15 eingreift. Ebenso ist denkbar, dass der Zahnkranz 14 an der Stirnseite der Muffe 9 angeordnet ist. Durch das Kuppeln der Muffe 9 mit der Antriebseinheit 15 kann die Muffe 9 mittels der Antriebseinheit 15 mit einer zu der Winkelgeschwindigkeit der Kupplungshälften 6, 7 verschiedenen Winkelgeschwindigkeit rotiert werden, so dass der Kupplungsspalt 8 verbreitert oder verschmälert werden kann. Die Kupplung zwischen der Muffe 9 und der Antriebseinheit 15 kann beispielsweise auch durch Treibriemen erfolgen. Die Antriebseinheit 15 ist ein Motor, insbesondere ein Elektromotor.

An der ersten Kupplungshälfte 6 ist ein erster Messpunkt 19 und an der zweiten Kupplungshälfte 7 ist ein zweiter Messpunkt 20 angebracht. Über den Abstand der beiden Messpunkte 19, 20 zueinander kann der Axialabstand 21 bestimmt werden. Das Verfahren zum Einstellen der Axialposition der beiden Kupplungshälften 6, 7 der Drehmomentkupplung 5 relativ zueinander ist wie folgt durchzuführen: Betreiben des Strangs 1, wobei von der Antriebseinheit 15 angetrieben die Muffe synchron rotiert wird; Vorherbestimmen eines Soll-Werts des Axialabstands 21 der beiden Kupplungshälften 6, 7; Bestimmen eines Ist-Werts des Axialabstands 21 der beiden Kupplungshälften 6, 7; Wenn der Soll-Wert ungleich dem Ist-Wert ist, Rotieren der Muffe 9 mittels der Antriebseinheit 15 mit einer zu der Winkelgeschwindigkeit der Kupplungshälften 6, 7 derart verschiedenen Winkelgeschwindigkeit und mit einer derartigen Dauer, dass der Ist-Wert gleich dem Soll-Wert wird. Beträgt die Drehfrequenz der Kupplungshälften 6, 7 beispielsweise 50 Hz, so kann die Muffe 9 beispielsweise mit einer Drehfrequenz von 49 Hz oder 51 Hz gedreht werden, wodurch der Kupplungsspalt 8 verbreitert oder verschmälert wird.

Ist der Soll-Wert im Wesentlichen gleich mit dem Ist-Wert, so kann die Muffe 9 von der Antriebseinheit 15 entkuppelt werden. Alternativ ist denkbar, dass in diesem Fall die Antriebseinheit 15 von der Muffe 9 angetrieben wird. Der Ist-Wert kann sich aus einem Abstand von einem der beiden Messpunkte 19, 20 zu einem Fixpunkt 23 oder 24 ergeben, welcher in Ruhe relativ zum Fundament 18 ist. Der Soll-Wert kann sich ebenso aus der Länge der Welle 2 und/oder 3 ergeben, die sich im Betrieb des Strangs 1 durch Wärmeausdehnung verändern kann. Es ist ebenso möglich den Abstand eines Punktes auf der Welle 2 oder 3 zu einem Referenzpunkt auf dem Gehäuse der Turbomaschine zu bestimmen. Dadurch könnte eine Differenzdehnung zwischen der Welle 2 oder 3 und dem Gehäuse erfasst werden. Die Messung des Abstands kann durch ein Ultraschallverfahren oder mittels eines induktiven Abstandssensors bestimmt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Drehmomentkupplung mit einer ersten Kupplungshälfte (6), die ein erstes Kupplungsgewinde (10) aufweist,
und einer zweiten Kupplungshälfte (7), die ein zweites Kupplungsgewinde (11) mit einer zum ersten Kupplungsgewinde (10) entgegensinnigen Drehrichtung aufweist und mit der ersten Kupplungshälfte (6) verdrehfest und relativ zur ersten Kupplungshälfte (6) axialverschiebbar befestigt ist, sowie einer Muffe (9) mit einem ersten Muffengewinde (12) und einem zweiten Muffengewinde (13),
wobei jedes der Muffengewinde (12, 13) mit einem der Kupplungsgewinde (10, 11) verschraubt ist und die Muffe (9) derart von einer drehzahlvariablen Antriebseinheit (15) angetrieben ist, dass die Muffe (9) mittels der Antriebseinheit (15) mit einer zu der Winkelgeschwindigkeit der Kupplungshälften (6, 7) verschiedenen Winkelgeschwindigkeit rotierbar ist, so dass der Axialabstand (21) der Kupplungshälften (6, 7) zueinander veränderbar ist, sowie synchron mit den Kupplungshälften (5, 6) rotierbar ist, so dass der Axialabstand (21) gleich bleibt.

2. Drehmomentkupplung gemäß Anspruch 1,
wobei die Kupplungsgewinde (10, 11) Außengewinde und die Muffengewinde (12, 13) Innengewinde und/oder die Kupplungsgewinde (10, 11) und die Muffengewinde (12, 13) Feingewinde sind.

3. Drehmomentkupplung gemäß Anspruch 1 oder 2,
wobei die Kupplungshälften (6, 7) formschlüssig gegenseitig in Eingriff stehen.

4. Drehmomentkupplung gemäß einem der Ansprüche 1 bis 3,
wobei die Antriebseinheit (15) ein Motor ist, insbesondere ein Elektromotor, welche mittels eines Getriebes (16) mit der Muffe (9) gekuppelt ist.

5. Drehmomentkupplung gemäß Anspruch 4,
wobei das Getriebe (16) ein von dem Motor angetriebenes Ritzel (17) aufweist, das in einen an der Muffe (9) angebrachten Zahnkranz (14) eingreift.

6. Drehmomentkupplung gemäß Anspruch 5,
wobei der Zahnkranz (14) stirnseitig oder radial außenseitig an der Muffe (9) angeordnet ist.

7. Strang mit mindestens zwei Turbomaschinen,
deren Rotoren mit einer Drehmomentkupplung (5) gemäß einem der Ansprüche 1 bis 6 gekuppelt sind.

8. Verfahren zum Einstellen der Axialposition von Rotoren von Turbomaschinen eines Strangs (1) gemäß Anspruch 7, mit den Schritten:
- Betreiben des Strangs (1) gemäß Anspruch 7 mit den Turbomaschinen, deren Rotoren mit der Drehmomentkupplung (5) miteinander gekuppelt sind, wobei von der Antriebseinheit (15) angetrieben die Muffe synchron zu den Rotoren rotiert wird;
- Vorherbestimmen eines Soll-Werts des Axialabstands (21) der beiden Kupplungshälften (6, 7);
- Bestimmen eines Ist-Werts des Axialabstands (21) der beiden Kupplungshälften (6, 7);
- wenn der Soll-Wert ungleich dem Ist-Wert ist, Rotieren der Muffe (9) mittels der Antriebseinheit (15) mit einer zu der Winkelgeschwindigkeit der Kupplungshälften (6, 7) derart verschiedenen Winkelgeschwindigkeit und mit einer derartigen Dauer, dass der Ist-Wert gleich dem Soll-Wert wird.

9. Verfahren gemäß Anspruch 8,
wobei der Ist-Wert aus einem Axialabstand von einem Punkt auf dem Strang (1) zu einem Fixpunkt am Fundament (18) des Strangs (1) bestimmt wird.

10. Verfahren gemäß Anspruch 8 oder 9,
wobei der Ist-Wert durch ein Ultraschallverfahren oder mittels eines induktiven Abstandssensors bestimmt wird.
